# EUROPÄISCHE PATENTSCHRIFT

(11) **EP 0 596 519 B1**
(45) Veröffentlichungstag und Bekanntmachung des Hinweises auf die Patenterteilung: **28.02.1996**
(21) Anmeldenummer: 93117971.7
(22) Anmeldetag: 05.11.1993
(51) Int. Cl.: A01G 9/10

(54) **Blumentopf, insbesondere Pflanztopf**
Flowerpot, especially transplanting pot
Pot de fleurs, en particulier pot de transplantation

(30) Priorität: 05.11.1992 HR 920805
(43) Veröffentlichungstag der Anmeldung: 11.05.1994
(73) Patentinhaber: Klein, Sasa, 41000 Zagreb (HR)
(72) Erfinder: Klein, Sasa, 41000 Zagreb (HR)
(74) Vertreter: Lewald, Dietrich, Dipl.-Ing.

(56) Entgegenhaltungen:
- DE-U- 8 509 996
- FR-A- 2 050 244
- FR-A- 2 215 887

## Beschreibung

Erfindung liegt auf dem Gebiet des Topfens bzw. Verpflanzens in der Gärtnerei, für den gewerblichen Anbau und das Züchten von Blumen und Gemüse. Die Erfindung betrifft einen Topf wie beschrieben im Oberbegriff des Anspruchs 1 und sowie veröffentlicht im FR-A-2215887.

In Frage kommende Klassifikationen: A01 G9/00 und AO1 G9/02 sowie schliesslich A47 G/700 und A 47 G/06
Der Erfindung liegt die Aufgabe zugrunde, einen Blumentopf anzugeben, der es ermöglicht, die Pflanze, insbesondere mit Ballen, sauber herauszunehmen, ohne sie zu beschädigen.

Bei üblichen Töpfen besteht das technische Problem darin, daß man die Pflanze sehr schwer aus dem Topf, meistens nur unter Beschädigung von deren Ballen und Wurzeln, herausbekommt. Ist die Wurzel der Pflanze mit dem Topf verwachsen, so daß, insbesondere bei Tontöpfen, der Topf zerschlagen werden muß, um die Pflanze herauszunehmen, kostet dies Arbeit, Zeit und Geld.

Das o.g. Problem bzw. die der Erfindung zugrunde liegende Aufgabe besteht in einem Topf, dessen Inhalt leicht von den Topfwandungen zu lösen ist und der einfach zu handhaben ist.

Erreicht wird dies erfindungsgemäß durch die kennzeichnenden Merkmale des Anspruchs 1.

Der Topf kann nach dem Herausnehmen der Pflanze und der Erde wieder gebraucht werden. Es ist so auch nicht mehr notwendig, nach jedem Umpflanzen neue Töpfe zu kaufen, Geld und Zeit werden gespart.

Ein weiterer grosser Vorteil der Massnahme nach der Erfindung liegt darin, daß der Inhalt des Topfes durch Aufklappen zur Verfügung gestellt werden kann, diese beiden Topfteile können also auch bei bestehenden Töpfen verwendet werden.

Genauer besteht der Topf aus 3 Teilen: einer Art Aussentopf, allerdings ohne Boden und zwei sog. Einlagen. Der die äussere Hülle bildende Topf hat die Form eines normalen Topfes. Die Topfeinlagen haben die gleiche Form wie der Topf, nur daß sie einige Millimeter kleiner sind als der Topf und gem. einer durch die Mittelachse des Innentopfes gehende Symmetrie-Ebene geschnitten sind. Dies bedeutet, daß sie in den Umfangstopf hinein passen. Der Aussentopf ohne Boden und der Innentopf aus zwei Teilen stellen eine besonders bevorzugte Ausführungsform der Erfindung dar.

Aus der technischen Lösung ergeben sich die folgenden Vorteile:
A) Eine schnellere und einfachere Art des Umpflanzens bzw. Auspflanzens der darin enthaltenen Pflanzen
B) beim Herausnehmen der Pflanze aus dem erfindungsgemässen Topf wird die Pflanze nicht beschädigt
C) Erde wird beim Herausnehmen der Pflanzen gespart, denn sie bleibt an der Wurzel haften, was beim Verpflanzen einen ganz erheblichen Vorteil (schnelleres Anwachsen, schnelleres Weiterwachsen) bedeutet.
D) Auch bleibt der Topf nach dem Herausnehmen sauber. Das Umpflanzen kann sogar in der Wohnung erfolgen.
E) Der leere Topf ist einfacher zu säubern von den Resten der Erde und der Pflanzen, der Aussentopf darum, weil er keinen Boden hat, der Innentopf darum, weil er aus zwei Teilen besteht.
F) Durch das Aufklappen des Topfes (innen) kann man die Feuchtigkeit der Erde einstellen, was bei gewöhnlichen Töpfen, da man das darin enthaltene Wurzelwerk ja nicht überwachen kann, nicht möglich ist. Und dies, ohne Erde zu verlieren und ohne die Pflanze zu beschädigen.
G) Durch Aufklappen des Topfes kann man auch die Größe der Wurzel betrachten, daraufhin bei ähnlichen Pflanzen möglicherweise die Zusammensetzung des Topfinhalts verändern und hat so die Möglichkeit, genau den richtigen Augenblick zum Umpflanzen oder Auspflanzen abzupassen.
H) Durch das öffnen des Topfes kann der Pflanzenwurzel Sauerstoff zugeführt werden. Dies wiederum führt zu einem besseren Wachstum.

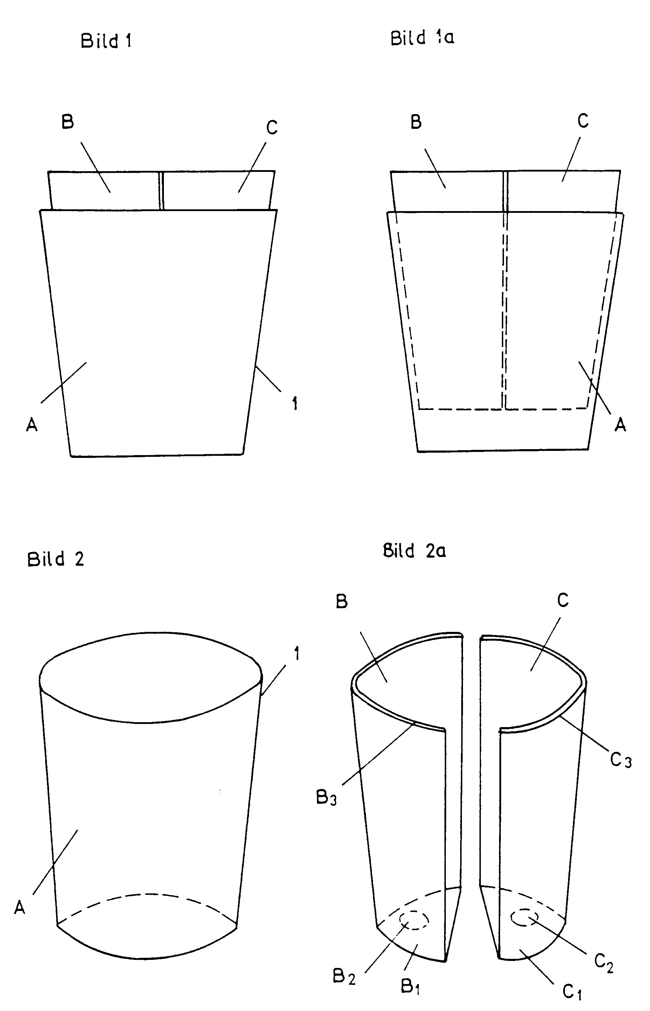

Beispielsweise Ausführungsformen der Erfindung sollen nun mit Bezug auf die beiliegenden Zeichnungen näher erläutert werden. Diese zeigen in
- Figur 1: eine erste Ausführungsform
- Figur 1 a: den Topf im Querschnitt
- Figur 2: den Aussentopf
- Figur 2 a: die Einlage bzw. den Innentopf gem. der Erfindung.

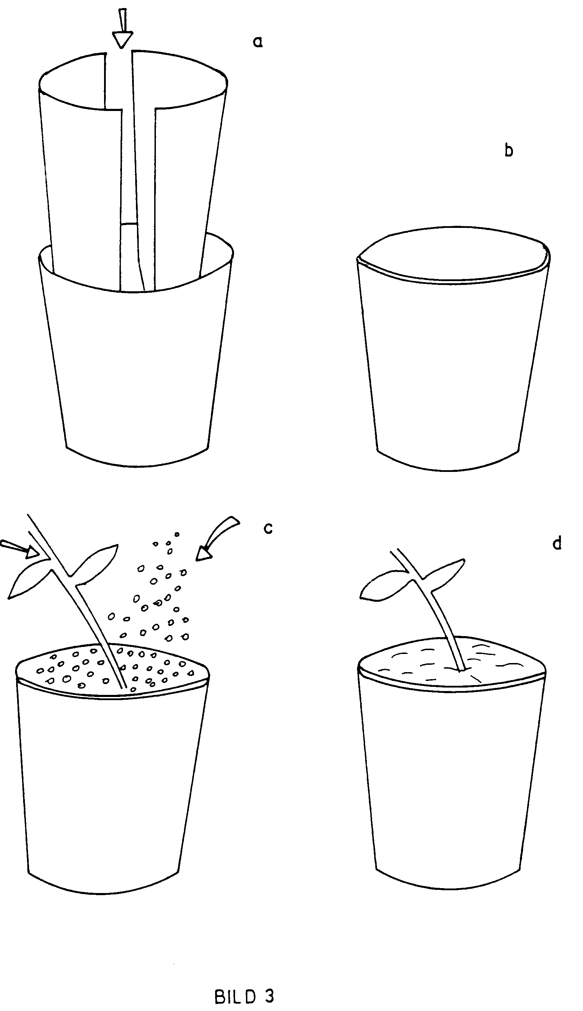

- Figur 3: zeigt verschiedene Phasen, nämlich die des Einsetzen des Topfes, den Aussentopf, die Bepflanzung des Topfes und den Ballen nach dem Auspflanzen (s. a, b, c, d) und

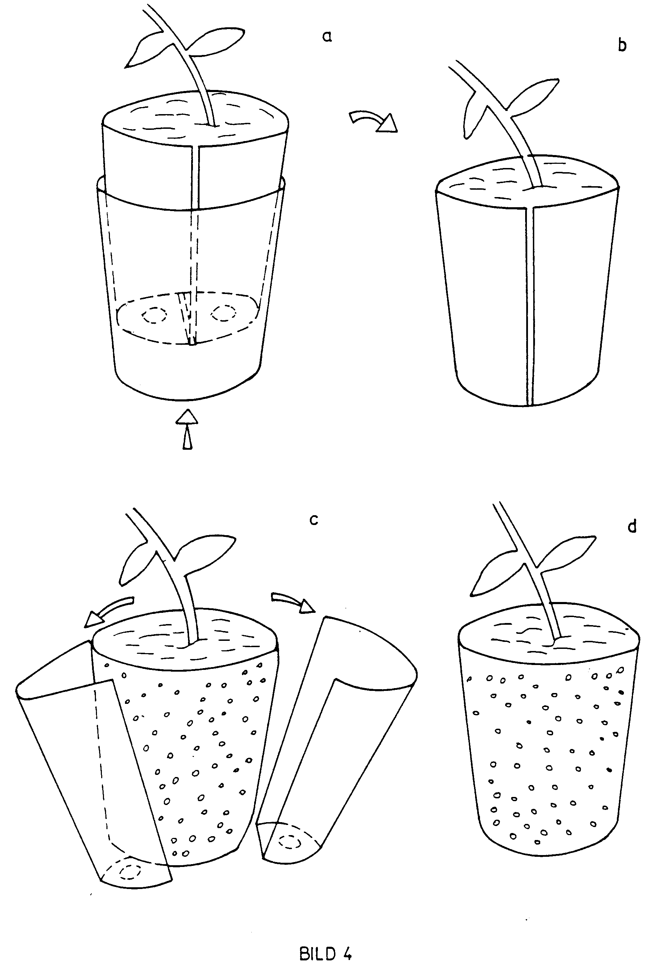

- Figur 4: zeigt die Entfernung der Pflanze aus dem Topf, sowie das Entfernen der Topfeinlagen (des Innentopfes), wobei ersichtlich der Topf gem. der Erfindung aus drei Teilen besteht.

Gemäß Figur 1 hat der Aussentopf A keinen Boden. In ihm sind zwei gleichgrosse Einlagen (halbierter Innentopf, bestehend aus B und C) angeordnet: Der Aussentopf A ohne Boden ist nicht bezüglich der Einlagen B, C fixiert. Die Einlagen B, C haben unten zwar einen Boden B1 und C1, jedoch jeweils ein eigenes Loch B2 und C2 und ergeben zusammen den erfindungsgemässen Blumentopf, wenn sie in den Aussentopf A eingesetzt sind. Die Einlagen, bzw. der Innentopf hat einen geringfügig kleineren Umfang 1 als der Haupttopf A. Sie können, wie erwähnt, gem. der Symmetrieachse geschnitten sein. Ein anderer Schnitt ist aber ebenfalls möglich. Die Einlagenteile B und C des Innentopfes sind bezüglich einander ebenfalls nicht fest genauso wie sie lose bezüglich des Übertopfes A sind. Vorzugsweise sind die Einlagenteile B und C symmetrisch und haben die gleiche Länge und Höhe wie der Umfang 1 des Aussentopfes A.

Es soll klargestellt werden, daß die reine Form des Topfes nicht neu ist, daß vielmehr der Topf gem. den bekannten Normen aussen ausgebildet sein kann.

Ist die Form des Aussentopfes A nicht konisch, dann ist es er forderlich, an den Einlagenteilen B, C einen kleinen nach aussen vorstehenden Rand B3 und C3 auszuführen, so daß sie aus dem Übertopf 1 des Haupttopfes A nicht herausfallen können. Beim Einpflanzen der Pflanze in den Topf gem. der Erfindung geschieht Folgendes:
In den Umfang des Haupttopfes A - s. Figur 3 a - werden die Einlagenteile B und C des Innentopfes von oben hineingelegt oder hineingeschoben, und zwar mit ihrem Boden B1 und C1 nach unten in den Haupttopf A. Die Einlagenteile B und C, sind sie einmal in dem Umfangstopf 1 des Haupttopfes eingelegt, ergeben den Topf gem. der Erfindung, der dann beispielsweise, wie in Figur 3 b dargelegt, aussehen kann und sich für das Auge des ungeübten Betrachters möglicherweise nicht von anderen Töpfen unterscheidet.

In den Topf wird dann die Pflanze und die Erde (Bild 3C) gegeben. Die Pflanze befindet sich jetzt im Topf - Figur 3D.

Nach dem Wachstum wird die Pflanze aus dem Topf herausgenommen.

Duch den unteren Teil des Umfangstopfes A, der keinen Boden hat, drückt man mit der Hand gegen den Innentopf bzw. die Einlagen B, C, innerhalb deren sich die Pflanze befindet nach oben, wie Figur 4A zeigt. Die Einlagenteile B, C, nimmt man noch zusammen mit der Pflanze heraus (Figur 4B) und entfernt dann die Pflanze (Figur 4C), indem man die Einlagenteile bzw. den Innentopf abnimmt, aufklappt oder ggf. bis zum Einpflanzen nur halb entfernt. Die Erde bleibt an der Pflanze bzw. am Ballen, der nicht beschädigt wird. Umpflanzen in einen grösseren Topf ist jetzt ohne weiteres möglich.

Wie gesagt: es kann auch ein normaler Topf verwendet werden, in den die Einlagen gesteckt werden. Nur das Herausdrücken des Innentopfes ist dann etwas mühsamer. Voraussetzung ist lediglich die Abmessung und die Form des Topfes, wie in den Figuren 1, 1a, 2, 2a, angegeben.

Es soll darauf hingewiesen werden, daß die wirtschaftlichen Vorteile ganz erheblich sind: auch der Laie kann erfindungsgemäß ohne weiteres verfahren. Es ist noch auf Folgendes hinzuweisen: hat der Übertopf oder Haupttopf keine runde Gestalt, sondern eine quadratische Form, so muß man an den oberen Teilen der Einlagen einen kleinen auskragenden Randteil anbringen. Wie gesagt,bei der Benutzung innerhalb bestehender Töpfe braucht der Boden nicht notwendigerweise fortgeschnitten werden. Die Form und das Verhalten von Topf und Innentopf sind etwas anders, aber trotzdem vorteilhaft.

## Patentansprüche

1. Topf zum Züchten und späteren Verpflanzen von Pflanzen, umfassend einen aus wenigstens zwei Einlagenteilen (B, C) gebildeten Innentopf und einen den Innentopf aufnehmenden Außentopf (A), wobei der Innentopf geringfügig kleiner als der Außentopf (A) ausgebildet ist, dadurch gekennzeichent, daß die den Innentopf bildenden Einlagenteile (B, C) weder miteinander noch mit dem Außentopf (A) verbunden und nur durch Einsetzen in den geringfügig größer ausgestalteten Außentopf (A) in diesem relativ zueinander gehalten sind.

2. Topf nach Anspruch 1, dadurch gekennzeichnet, daß man sich die Einlagenteile (B, C) des Innentopfes gemäß einer durch die Mittelachse gehenden Symmetrie-Ebene geschnitten vorstellen kann.

3. Topf nach einem der vorhergehenden Ansprüche, dadurch gekennzeichnet, daß die Einlagenteile (B, C) etwa in Form eines halben Innentopfes an ihrem Boden (B1, C1) jeweils über ein Loch (C2, B2) verfügen.

4. Topf nach einem der vorhergehenden Ansprüche, dadurch gekennzeichnet, daß der Außentopf (A) keinen Boden hat.

5. Topf nach einem der vorhergehenden Ansprüche, dadurch gekennzeichnet, daß er mit an sich bekannten beispielsweise Wasser im Außenmaterial speichernden Konstruktionen kombinierbar ist.

6. Topf nach einem der vorhergehenden Ansprüche, dadurch gekennzeichnet, daß die Einlagenteile (B, C) auf der Innenseite von einer die Haarwurzelbildung fördernden Gestaltung sind.

7. Topf nach einem der vorhergehenden Ansprüche, dadurch gekennzeichnet, daß die Einlagenteile (B,C) auf der Innenseite porös ausgebildet sind.

## Claims

1. Pot for cultivating and later transplanting plants, comprising an inner pot formed by at least two insert elements (B, C) and an outer pot (A) receiving the inner pot, whereby the inner pot is formed slightly smaller than the outer pot (A), characterized in that the insert elements (B, C) forming the inner pot are neither connected to each other nor to the outer pot (A) and are held therein relatively to each other only by inserting them into the slightly wider formed outer pot (A).

2. Pot according to claim 1, characterized in that one can imagine the insert elements (B, C) of the inner pot cut by a symmetry plane passing through the center line.

3. Pot according to any of the preceding claims, characterized in that the insert elements (B, C) approximately in the form of a half inner pot are each provided with a hole (C2, B2) at their bottom (B1, C1).

4. Pot according to any of the preceding claims, characterized in that the outer pot (A) does not have a bottom.

5. Pot according to any of the preceding claims, characterized in that it is combinable with constructions known as such, storing for example water in the outer material.

6. Pot according to any of the preceding claims, characterized in that the insert elements (B, C) are embodied at the inner surface so as to stimulate the formation of hair roots.

7. Pot according to any of the preceding claims, characterized in that the insert elements (B, C) are embodied porous at the inner surface.

## Revendications

1. Pot pour cultiver et ultérieurement transplanter des végétaux, comportant un pot intérieur, formé d'au moins deux éléments de doublure intérieure (B, C), et un pot extérieur (A), dans lequel est logé le pot intérieur, le pot intérieur étant un peu plus petit que le pot extérieur (A), caractérisé en ce que les éléments de doublure intérieure (B, C) formant le pot intérieur ne sont reliés ni l'un avec l'autre, ni avec le pot extérieur (A), et ne sont maintenus dans ce dernier, relativement l'un à l'autre, que par insertion dans le pot extérieur (A), conçu un peu plus grand.

2. Pot selon la revendication 1, caractérisé en ce qu'on peut se représenter les éléments de doublure intérieure (B, C) du pot intérieur, coupés selon un plan de symétrie passant par l'axe central.

3. Pot selon l'une des revendications précédentes, caractérisé en ce que les éléments de doublure intérieure (B, C), approximativement sous forme d'un demi-pot intérieur, disposent chacun, sur leur fond (B1, C1), d'un trou (C2, B2).

4. Pot selon l'une des revendications précédentes, caractérisé en ce que le pot extérieur (A) n'a pas de fond.

5. Pot selon l'une des revendications précédentes, caractérisé en ce qu'il peut être combiné avec des structures qui, d'une manière connue en soi, emmagasinent par exemple de l'eau dans le matériau extérieur.

6. Pot selon l'une des revendications précédentes, caractérisé en ce que les éléments de doublure intérieure (B, C) ont, sur le côté intérieur de l'un d'entre eux, une configuration favorisant la formation des racines capillaires.

7. Pot selon l'une des revendications précédentes, caractérisé en ce que les éléments de doublure intérieure (B, C) sont poreux sur leur côté intérieur.
